# EUROPEAN PATENT SPECIFICATION

(11) **EP 3 396 131 B1**
(45) Date of publication and mention of the grant of the patent: **17.03.2021**
(21) Application number: 18169590.9
(22) Date of filing: 26.04.2018
(51) Int. Cl.: F02B 33/40, F02B 37/04, F02B 37/14, F02B 39/10, F02B 39/04

(54) **INTERNAL COMBUSTION ENGINE ARRANGEMENT AND OPERATION THEREOF**
VERBRENNUNGSMOTORBAUGRUPPE UND BETRIEB DAVON
AGENCEMENT DE MOTEUR À COMBUSTION INTERNE ET SON FONCTIONNEMENT

(30) Priority: 26.04.2017 IT 201700044961
(43) Date of publication of application: 31.10.2018
(60) Divisional application: 20210449.3
(73) Proprietor: FPT Motorenforschung AG, 9320 Arbon (CH)
(72) Inventor: FESSLER, Harald, 9320 ARBON (CH)
(74) Representative: Fiume, Orazio

(56) References cited:
- EP-A1- 2 096 295
- WO-A1-2007/083131
- GB-A- 2 530 101
- US-A1- 2012 090 319

## Description

### Field of the invention

The present invention relates to an internal combustion engine arrangement and operation thereof.

WO2007083131 and GB2530101 disclose the features of the preamble of claim 1.

### Description of the prior art

Turbo charger (boost), EGR rate and thermal management are major factors to improve engine performance.

A challenge for thermal management is to warm up the ATS within short time and keep the temperatures at a sufficiently high level to realize good efficiencies even at low loads.

A well known measure is to throttle the intake flow or to throttle the exhaust or both.

EGR rate control can be obtained by throttling exhaust line. Indeed, if the rates are not feasible with the "natural" pressure differences between intake and exhaust. Controlling the EGR rate in combination with boost adjustment (e.g. by a VTG) is also challenging.

Another challenge is the boost adjustment. Usually, beside the more expensive VTG, the common control of the boost pressure is operated by means of a waste gate at the turbine side. Therefore, the waste gate valve, originally implemented for avoiding the exceeding of intrinsic limits of the turbocharger, can be used to help exhaust recirculation problems.

However, a waste gate adjusts the boost pressure due to bypassing the turbine through a bypass pipe by wasting useful energy.

Therefore, the above means to operate an internal combustion engine develop mainly a dissipative effect.

### Summary of the invention

Therefore, the main object of the present invention to provide the above aspects in order to improve the combustion engine operation in several operating conditions, from the ATS warm up to the EGR recirculation, when an EGR assembly is present, in a less dissipative way, thus, by increasing the overall combustion engine efficiency.

The main principle of the invention is to introduce, in a turbocharged internal combustion engine layout, a controllable volumetric compressor, such as a roots or screw compressor driven by an electric drive or connected with variable ratio gear train to the crankshaft. The volumetric compressor is arranged preferably between the compressor of the turbocharger and the intake of the internal combustion engine.

In the following "volumetric compressor" is summarized as "variable compressor".

The variable compressor is controlled in order to adjust the intake pressure. Therefore, the electric drive or the variable ratio gear train of the variable compressor can suitably furnish torque to obtain intake air compression and, according to the invention, can work to extract energy from the airflow pumped by the compressor of the turbocharger. This energy, in one case, is converted into electrical energy, and in another case is redirected towards the engine crankshaft.

This behavior of the variable compressor can be activated to either adjust the boost or on the basis of the turbocharger speed, at full load, in order to avoid its over speed, or to obtain ATS warm up or to facilitate EGR recirculation, or at engine partial load to achieve a predetermined engine target engine fuel consumption.

A further aspect is to support the ATS warm up by a reduction of the air flow at the intake (boost).

According to another preferred aspect of the invention, the variable compressor is controlled to help the EGR to recirculate.

In such a case, if the EGR pipe flows into the intake line immediately downstream of the variable compressor, the latter works so as to reduce boost to reduce the pressure in the section of the inlet line where the EGR pipe flows by facilitating the EGR recirculation. Instead, if the EGR pipe flows into the intake line immediately upstream of the variable compressor, the latter, adds boost pressure in order to facilitate the EGR gasses to recirculate.

These and further objects are achieved by means of the attached claims, which describe preferred embodiments of the invention, forming an integral part of the present description.

The features disclosed in the prior art background are introduced only in order to better understand the invention, not as a declaration about the existence of known prior art. The features described in the prior art background, if not specifically objected, and form part of the present invention.

### Brief description of the drawings

The invention will become fully clear from the following detailed description, given by way of a mere exemplifying and non limiting example, to be read with reference to the attached drawing figures, wherein:

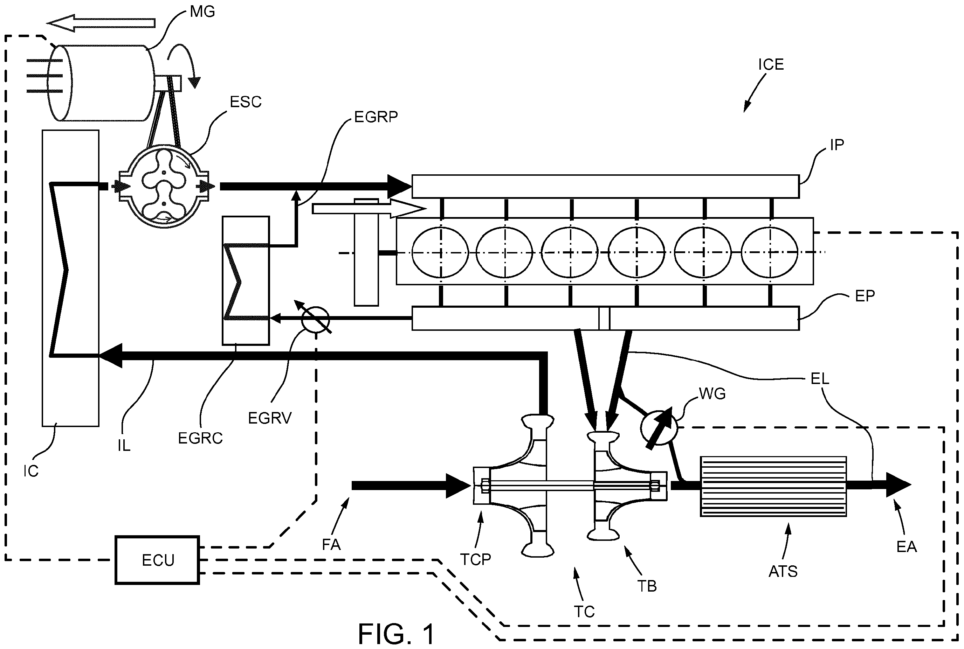

- Figs. 1 - 3 discloses three embodiment of the present invention differing for the point arrangement of an variable compressor between the turbocharger compressor and the intake of the internal combustion engine, in respect of the position of the intercooler and the EGR admission point.

The same reference numerals and letters in the figures designate the same or functionally equivalent parts. According to the present description, the term "second element" does not imply the presence of a "first element", first, second, etc.. are used only for improving the clarity of the description and they should not be interpreted in a limiting way.

### Detailed description of the preferred embodiments

The figures disclose an internal combustion engine, preferably a Diesel engine, comprising an intake IP and an exhaust manifold EP.

An outlet line EL is connected to the exhaust manifold EP, an inlet line IL is connected to the intake manifold IP. The internal combustion engine comprises also a turbocharger TC. The latter comprises, as known, a turbine TB arranged on the outlet line EL and a compressor TCP arranged on the inlet line. The turbine TB, in operation, axially drives in rotation the compressor TCP.

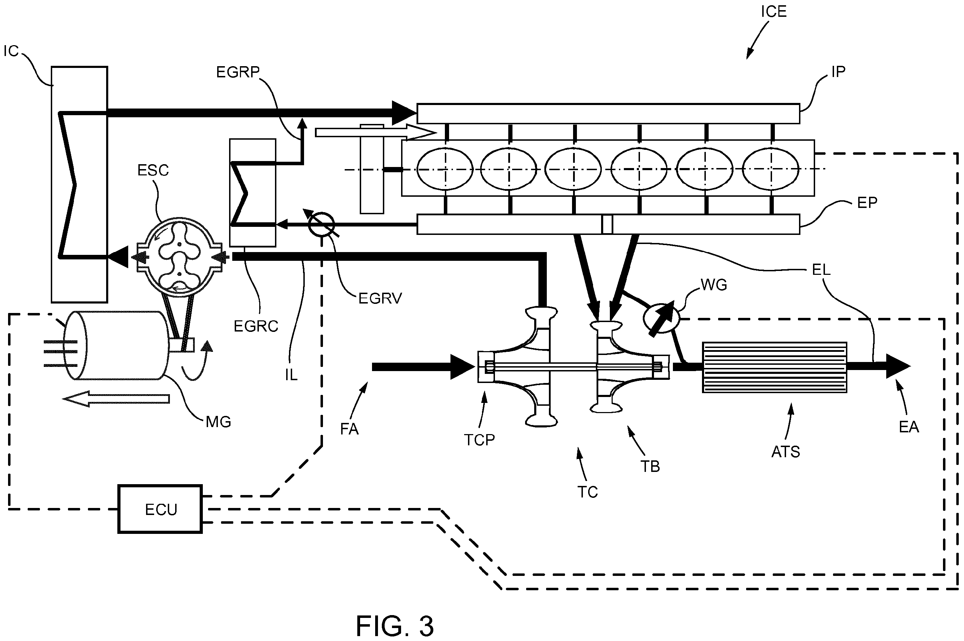

According to figure 1, a variable compressor ESC is arranged between the intercooler IC and the combustion engine intake IP, while according to figure 3, the variable compressor ESC is arranged between the compressor TCP and the intercooler IC.

According to a first embodiment of the invention, the presence of EGR means and/or of an intercooler is optional. The variable compressor, according to all the embodiments here described and disclosed in the figure, is always generically between the intake IP and the compressor TCP. Thus, figures disclose different positioning of the variable compressor in relation with the EGR outflow in the inlet line.

In addition, according all the embodiments the entire fresh air compressed by the compressor crosses the variable compressor. This means that no bypasses over the variable compressor are present.

Indeed, the aim of the invention is to adjust the variable compressor ESC as a load for the compressor or as a supercharger, supplementing the compressor, to achieve the right amount of fresh air and/or exhaust gas entering the internal combustion engine.

The variable compressor ESC, according to a possible embodiment of the invention, comprises an electric drive MG driving the variable compressor ESC and controlled by a control unit, which preferably coincides with the one deputy to control the internal combustion engine ECU as a whole. Alternatively, as introduced above, and better in the followings, the variable compressor ESC can be connected with the engine crankshaft through a variable ratio gear train connection, such as a CVT and so on, in order to receive or supply torque by/to crankshaft and the internal combustion engine ECU controls said variable ratio connection. In the followings the example relates to the electric version of the variable compressor, however, the "mechanical implementation" is suitable to achieve the aims of the present invention with the exception of the electric energy generation.

According to a first aspect -boost & turbo speed adjustment - of the present invention, the electric drive MG is driven in order to throttle the intake, thus braking/reducing the airflow pumped by the compressor TCP, in order to avoid its over speed. Therefore, a speed sensor or a speed estimator can be implemented to measure/estimate the turbocharger speed and consequently the variable compressor is controlled to throttle the intake line by slowing down the turbocharger TC.

However, if the boost pressure from the turbo charger is not sufficient to boost the engine, the ESC is controlled to increase the boost, e.g. at low engine speeds, supplementing the compressor.

Preferably, the variable compressor, at partial loads, is also controlled to achieve best fuel consumption performance of the internal combustion engine.

The two embodiments of figure 1 and 3, differ only for the different order of the components: variable compressor ESC - inter cooler IC.

The same figures disclose also the presence of EGR means that, being optional, define further embodiments of the invention.

The EGR means comprise a pipe EGRP, here below called "EGR pipe", interconnecting the engine intake IP and the engine exhaust manifold EP to recirculate exhaust gasses (EGR) and an EGR valve EGRV to meter the recirculated gasses.

The EGR pipe is connected to the outlet line upstream the turbine TB and to the inlet line downstream the compressor TCP, by defining a so called, high pressure EGR. Preferably, also and EGR cooler EGRC is arranged on said EGR pipe to refresh the recirculated exhaust gasses.

In both the figures 1 and 3, the EGR pipe EGRP flows into the inlet line downstream the position of the variable compressor. Therefore, according to the second embodiment that can be combined with the first one, the variable compressor is controlled (also) to adjust the intake pressure, in order to facilitate the high pressure EGR recirculation. Said adjustment mainly consists of an intake throttling by the ESC just upstream of the EGR outflow.

In this case the variable compressor contrasts the compressor operation defining a load for it.

According to both the first and second embodiments, the throttling is operated in a less dissipative way, being the pressure and speed airflow energy converted into electric energy (or mechanical energy).

Thus, according to a preferred embodiment of the invention, the assembly further comprises electric storage means, such as a battery or supercapacitor, to store the electric energy produced during intake throttling such as to limit the turbocharger speed or to permit the EGR recirculation. The electric energy produced is used directly by a motor/generator operatively connected with the engine crank shaft.

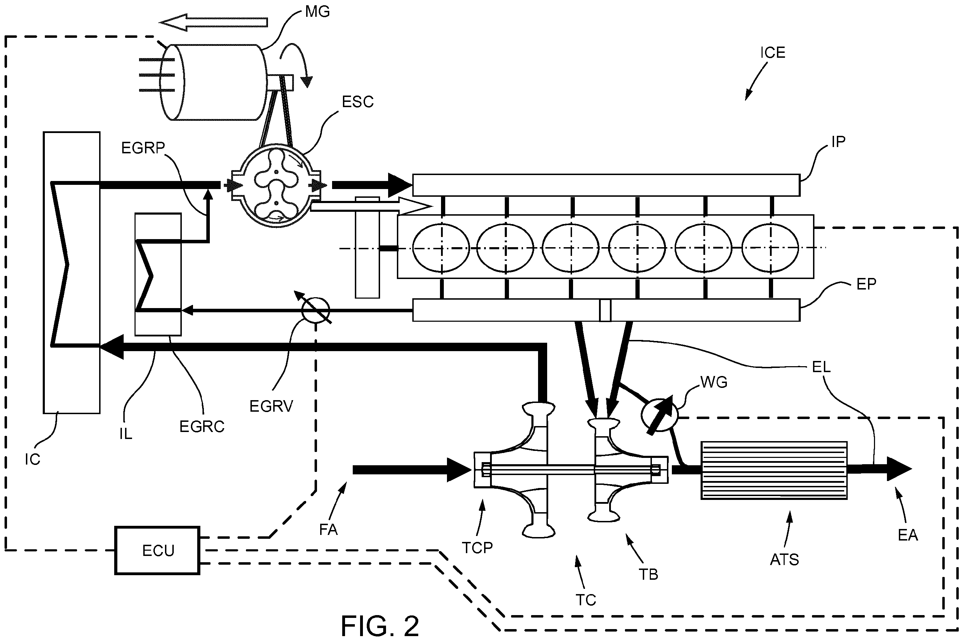

Figure 2 discloses a third embodiment, similar to the above ones, whose difference, with respect to those of figures 1 and 3, is in the arrangement of the variable compressor ESC downstream of the point where the EGR pipe flows into the inlet line.

According to said third embodiment, the variable compressor is controlled to increase inflow air compression in order to facilitate the EGR recirculation, by sucking exhaust gasses. In other words, the variable compressor is controlled to realize a second compression stage of the fresh air previously partially compressed by the compressor TCP, so as to suck also the EGR, by lowering the pressure upstream thereof, i.e. between the compressor TCP and the variable compressor ESC, where the EGR pipe outflows.

In this case, the variable compressor uses electric energy from a battery or generator, thus its electric drive is operated as a motor. Alternatively, when it is driven by the crankshaft, its variable connection is such that to drain torque from the crankshaft.

Preferably, an intercooler IC is present downstream the compressor TCP and upstream said point where the EGR pipe flows in order to facilitate the task to reduce the pressure in such inlet line section. Indeed, the intercooler causes pressure lowering.

According to another embodiment that can be implemented alone or in combination with one or more of the above embodiments, the internal combustion engine further comprises an After Treatment System (ATS) arranged downstream the turbine TB, deputy to threat the internal combustion engine exhaust gasses in order to lower/suppress the pollutants herein contained.

The variable compressor can be (also) controlled to throttle the intake during ATS warm up operation. In contrast, if the ATS has reached an upper limit temperature, the ATS temperature can be reduced, by increasing both the air flow crossing the engine and EGR recirculation.

Due to the possibility to control the boost independently from the turbocharger, a larger turbine can be implemented without detriment for dynamic performance of the engine boost.

According also to the present embodiment, the throttling is operated in a less dissipative way, begin the pressure and speed airflow energy converted into electric energy. If a VTG is used, it could be closed to increase the exhaust backpressure while the consequent boost increase is recovered by the variable compressor inducing a boost reduction, by delivering energy to the battery or to the crankshaft. Hence, thanks to the present invention, it is possible to increase exhaust gas temperatures in an energy efficient way.

The ATS can comprise a combination of DOC (Diesel oxidation catalyst), DPF (Diesel particulate filter) and SCR (Selective catalyst reduction). All these acronyms are well known to the skilled person in the art.

The exact combination of the devices defining the ATS is not relevant. What is relevant is the fact that at least one ATS component needs to reach a light off temperature to work properly. Typically, the SCR needs 250°C to be able to convert NOx.

Typically, DOC need to reach a certain temperature to be able to burn HC.

The EGR valve EGRV can be suitably coordinated with the activation of the variable compressor ESC.

Therefore, in order to properly control the EGR valve opening, also the contribution of the electric supercharger is taken into account.

Usually an intake pressure sensor is implemented in order to estimate the engine operating conditions and to control the fuel injection.

According to the embodiments of the figure 1 and 3, just one intake pressure sensor is enough to that task. However, according to the embodiment of figure 2 (eventually combined with the other suitable embodiments described above), a second pressure sensor is arranged in the section of inlet line between the compressor TCP and the variable compressor ESC.

According to any of the above embodiments, the turbine can be a variable geometry turbine (VGT) or a fixed geometry turbine. In addition, the turbine can be provided of a bypass pipe commanded by a fixed or controllable waste gate valve WG.

The mounting sequence of intercooler, variable compressor and EGR outflow point can be directly derived by the figures, by considering that the warm up strategy and the over-speed protection strategy can be implemented in all the variants disclosed in the figures 1 - 3.

Preferably, the variable compressor comprises a Roots blower or a screw blower.

As disclosed above, said "less dissipative" effect can be achieved, thought out all the embodiments, by means of a variable compressor mechanically connected with the crankshaft using a continuously variable and controllable gear ratio (CVT), without the implementation of an electric motor. Thus, in this case the energy would be stored/furnished within/by the combustion engine itself.

An intermediate solution between the electrical and the mechanical solution can be found by driving the variable compressor with an electric drive having its stator rotatably connected through a gear train, with constant ration, to the crankshaft.

In this case, only the delta speed with respect to the crankshaft speed is "filled" or supplemented electrically through the electric drive. In other words, the electric drive works as the above CVT with respect to the crankshaft without implementing a CVT.

A further solution consists in adding a further electric drive connected to the engine crankshaft and to electrically interconnect said further electric drive with the variable compressor electric drive in order to directly exchange electric energy between the electric drives according to the above operation conditions of the variable compressor.

In any case, the negative impact of the boost reduction is partially recovered, since it delivers power to the crank shaft or electric energy to a battery.

In addition, the variable compressor can offer an improved load response and torque increase during transients, namely when the vehicle is accelerating.

On the other side, variable compressor, controlled as disclosed above, permits to replace a waste gate that can be left only for safety reasons and can have a fixed intervention threshold.

In addition, if the turbine has variable geometry VTG, an optimization of its rack position and variable compressor speed is feasible. In other words, the variable compressor can be controlled in order to maintain the variable geometry turbine in the optimum operating condition even when the internal combustion engine requires a boost level leading the turbine to work outside said optimum operating condition.

Furthermore, since the variable compressor can modify the boost pressure by its speed, the EGR rate can be manipulated and controlled in a fuel efficient way. For example, the VTG rack is closed more than required in terms of boost, obtaining an exhaust backpressure facilitating the EGR recirculation. On the other side, the excessive boost is reduced by the ESC converting the excessive boost into electric energy, this especially according to the embodiments of figures 1 and 3.

Analogously, according to Fig 2, the variable compressor ESC additional boosts the combustion engine to increase the EGR flow rate.

This invention can be implemented advantageously in a computer program comprising program code means for performing one or more steps of such method, when such program is run on a computer, in particular, an engine control unit. For this reason, the patent shall also cover such computer program and the computer-readable medium that comprises a recorded message, such computer-readable medium comprising the program code means for performing one or more steps of such method, when such program is run on a computer, in particular, an engine control unit.

## Claims

1. Internal combustion engine arrangement comprising an internal combustion engine (ICE) having an intake (IP) and an exhaust manifold (EP); the arrangement comprising an outlet line (EL) connected to the exhaust manifold (EP), an inlet line (IL) connected to the intake manifold (IP), a turbocharger (TC) comprising a turbine (TB) arranged on the outlet line (EL) and a compressor (TCP) arranged on the inlet line, wherein the turbine (TB) is arranged to drive in rotation the compressor (TCP) and wherein a volumetric controllable compressor, hereinafter "variable compressor (ESC)", is arranged between the intake (IP) and said compressor (TCP), the internal combustion engine **being characterized in that** said variable compressor (ESC) is arranged to receive an entire amount of air compressed by said compressor (TCP) and **in comprising** control means (ECU) programmed to control said variable compressor a) to adjust an intake throttling, wherein the variable compressor is controlled to throttle the intake air on the basis of a turbocharger speed, by reducing an air flow entering the combustion engine, in order to avoid turbocharger over speed.

2. Arrangement according to claim 1, wherein the variable compressor is connected to an electric drive or is connected to a crankshaft of the internal combustion engine by a variable ratio gear train, so as to extract energy from the airflow pumped by the turbocharger and to convert such energy into electrical energy or, respectively, into mechanical energy towards the crankshaft, when the variable compressor is controlled to define said intake throttling.

3. Arrangement according to claim 1, wherein said control means are also programmed to at least one of the followings:
b) to adjust an intake throttling on the basis of at least one component temperature of an After-treatment system (ATS) connected to said exhaust line, in order to control a temperature of said ATS component;
c1) to adjust an intake throttling in order to reduce a pressure in an inlet line section immediately downstream the variable compressor where a high pressure exhaust gas recirculation (EGR) pipe (EGRP) outflows or
c2) to define a second supercharging stage, cooperating with said compressor(TCP) in order to reduce a pressure in an inlet line section immediately upstream the variable compressor in relation to the exhaust pressure, where a high pressure exhaust gas recirculation (EGR) pipe (EGRP) outflows so as to suck exhaust gas;
d) wherein said turbine has variable geometry and said control unit is configured to control a rack position of said turbine in order to maintain the turbocharger in its optimal operating condition and to achieve a predetermined combustion engine boost level by controlling said variable compressor to supplement or reduce the boost provided by said turbocharger in order to obtain said predetermined combustion engine boost level.

4. Arrangement according to anyone of the previous claims, wherein said control means (ECU) is programmed to control said variable compressor, according to at least two of the above a), b) c1) or c2), d.

5. Arrangement according to any one of the previous claims, wherein, when the engine is working at partial load, said variable compressor operation is controlled to achieve a predetermined engine target engine fuel consumption.

6. Arrangement according to any one of the claims 1 - 4, wherein said turbine has a fixed geometry or wherein said turbine has a variable geometry and wherein according to
c1), given a predetermined boost level, the variable compressor is controlled to adjust intake throttling, forcing a narrower turbine rack to achieve said predetermined boost level, by increasing backpressure and facilitating EGR recirculation;
c2), given a predetermined boost level, the variable compressor is controlled to facilitate EGR recirculation.

7. Arrangement according to any one of the claims 1 - 4, wherein the arrangement further comprises an intercooler (IC) arranged on said inlet line between said compressor (TCP) and said variable compressor (ESC).

8. Arrangement according to any one of the claims 1 - 4, wherein the arrangement is further provided of a high pressure EGR and an intercooler (IC) arranged on said inlet line between said variable compressor (ESC) and a point on the inlet line where an exhaust gas recirculation (EGR) pipe (EGRP) flows.

9. Arrangement according to any one of the claims 1 - 4, wherein the arrangement is further provided of a high pressure EGR and an intercooler (IC) arranged on said inlet line between said compressor (TCP) and a point on the inlet line where an exhaust gas recirculation (EGR) pipe (EGRP) flows.

10. Arrangement according to any of previous claims, wherein said variable compressor is a Roots blower or a screw blower and wherein the arrangement comprises
- a gear train and a continuously variable gear (CVT) operatively interconnecting a crankshaft of the internal combustion engine (ICE) and the variable compressor or
- battery storage means and an electric drive (MG) electrically connected to said battery storage means and arranged to drive said variable compressor and working as a generator when throttling of the intake line is requested or as a motor when the variable compressor defines a second supercharging stage or
- a first electric drive (MG) arranged to drive or be driven by said variable compressor and a second electric motor/generator suitable to be connected to an engine crankshaft so as to supply or to be supplied by said first electric drive (MG).

11. Arrangement according to claim 10, wherein said electric drive (MG) has a stator connected to a fixed point of the internal combustion engine or connected with a crankshaft of the internal combustion engine so as only a speed variation with respect to the crankshaft speed is supplemented electrically by the electric drive.

12. Arrangement according to any of previous claims, wherein said EGR pipe comprises an EGR valve (EGRV) connected thereon in order to control an exhaust gas flow recirculated and wherein, when the EGR pipes flows in an inlet section between the compressor and variable compressor (c2)) the arrangement comprises pressure means to measure a pressure in said inlet section and wherein said control means (ECU) are arranged to control said EGR valve according to said pressure measurement.

13. Method to operate an internal combustion engine arrangement, the arrangement comprising an internal combustion engine (ICE) having an intake (IP) and an exhaust manifold (EP); the arrangement comprising an outlet line (EL) connected to the exhaust manifold (EP), an inlet line (IL) connected to the intake manifold (IP), a turbocharger (TC) comprising a turbine (TB) arranged on the outlet line (EL) and a compressor (TCP) arranged on the inlet line, wherein the turbine (TB) axially drives in rotation the compressor (TCP) and wherein a variable compressor (ESC) is arranged between the intake (IP) and said compressor (TCP) to receive an entire amount of air compressed by said compressor (TCP), the method comprising at least the following step aiming to control said variable compressor (ESC):
a) to adjust an intake throttling, wherein the variable compressor is controlled to throttle the intake air on the basis of a turbocharger speed, by reducing an air flow entering the combustion engine, in order to avoid turbocharger over speed.

14. Method according to claim 13, further comprising at least one of the following steps:
b) to adjust an intake throttling on the basis of at least one component temperature of an After-treatment system (ATS) connected to said exhaust line, in order to control a temperature of said ATS component;
c1) to adjust an intake throttling in order to reduce a pressure in an inlet line section immediately downstream the variable compressor where a high pressure exhaust gas recirculation (EGR) pipe (EGRP) outflows or
c2) to define a second supercharging stage in order to reduce a pressure in an inlet line section immediately upstream the variable compressor in relation to the exhaust pressure, where a high pressure exhaust gas recirculation (EGR) pipe (EGRP) outflows;
d) to control a rack position of said turbine having variable geometry in order to maintain the turbocharger in its optimal operating condition and to achieve a predetermined combustion engine boost level by controlling said variable compressor to supplement or reduce the boost provided by said turbocharger in order to obtain said predetermined combustion engine boost level.

15. Computer program comprising computer program code means adapted to cause the device of claim 1 to perform the method of claim 13 or 14, when said program is run on a control means (ECU) according to claim 1.

16. A computer readable medium having the program of claim 15 recorded thereon.

## Patentansprüche

1. Brennkraftmaschinenanordnung, die eine Brennkraftmaschine (ICE) mit einem Einlasskrümmer (IP) und einem Auslasskrümmer (EP) besitzt; wobei die Anordnung eine mit dem Auslasskrümmer (EP) verbundene Auslassleitung (EL), eine mit dem Einlasskrümmer (IP) verbundene Einlassleitung (IL) und einen Turbolader (TC), der eine an der Auslassleitung (EL) angeordnete Turbine (TB) und einen an der Einlassleitung angeordneten Kompressor (TPC) enthält, umfasst, wobei die Turbine (TB) dafür ausgelegt ist, den Kompressor (TPC) rotatorisch anzutreiben, und wobei ein Kompressor mit steuerbarem Volumen, der im Folgenden "variabler Kompressor (ESC)" genannt wird, zwischen dem Einlass (IP) und dem Kompressor (TCP) angeordnet ist, wobei die Brennkraftmaschine **dadurch gekennzeichnet ist, dass** der variable Kompressor (ESC) dafür ausgelegt ist, eine gesamte Luftmenge, die von dem Kompressor (TCP) komprimiert wird, zu empfangen, und dadurch, dass sie Steuermittel (ECU) umfasst, die programmiert sind, den variablen Kompressor für Folgendes zu steuern:
a) Einstellen einer Einlassdrosselung, wobei der variable Kompressor gesteuert wird, die Einlassluft auf der Grundlage einer Turboladerdrehzahl zu drosseln, indem eine Luftmenge, die in die Brennkraftmaschine eintritt, verringert wird, um eine zu hohe Turboladerdrehzahl zu vermeiden.

2. Anordnung nach Anspruch 1, wobei der variable Kompressor mit einem elektrischen Antrieb verbunden ist oder mit einer Kurbelwelle der Brennkraftmaschine über einen Getriebezug mit variablem Übersetzungsverhältnis verbunden ist, um aus dem Luftstrom, der durch den Turbolader gepumpt wird, Energie zu extrahieren und um diese Energie in elektrische Energie bzw. in mechanische Energie zu der Kurbelwelle umzusetzen, wenn der variable Kompressor gesteuert wird, um die Einlassdrosselung zu definieren.

3. Anordnung nach Anspruch 1, wobei die Steuermittel außerdem für wenigstens eines der Folgenden programmiert ist:
b) Einstellen einer Einlassdrosselung anhand der Temperatur wenigstens einer Komponente eines Nachbehandlungssystems (ATS), das mit der Auslassleitung verbunden ist, um eine Temperatur der ATS-Komponente zu steuern;
c1) Einstellen einer Einlassdrosselung, um einen Druck in einem Einlassleitungsabschnitt direkt stromabwärts des variablen Kompressors, wo ein Hochdruck-Abgasrückführungsrohr (AGR-Rohr, AGRP) abzweigt, zu verringern, oder
c2) Definieren einer zweiten Aufladungsstufe, die mit dem Kompressor (TCP) zusammenwirkt, um einen Druck in einem Einlassleitungsabschnitt direkt stromaufwärts des variablen Kompressors in Bezug auf den Abgasdruck dort, wo ein Hochdruck-Abgasführungsrohr (AGR-Rohr, AGRP) abzweigt, um Abgas anzusaugen, zu verringern;
d) wobei die Turbine eine variable Geometrie besitzt und die Steuereinheit konfiguriert ist, eine Stellung der Turbine zu steuern, um den Turbolader in seinem optimalen Betriebszustand zu halten und um einen vorgegebenen Brennkraftmaschinen-Verstärkungsgrad durch Steuern des variablen Kompressors, um die durch den Turbolader bereitgestellte Verstärkung zu erhöhen oder zu verringern, um den vorgegebenen Brennkraftmaschinen-Verstärkungsgrad zu erhalten, zu erzielen.

4. Anordnung nach einem der vorhergehenden Ansprüche, wobei die Steuermittel (ECU) programmiert sind, den variablen Kompressor in Übereinstimmung mit wenigstens zwei der obigen Punkte a, b, c1 oder c2, d zu steuern.

5. Anordnung nach einem der vorhergehenden Ansprüche, wobei dann, wenn die Kraftmaschine unter Teillast arbeitet, der Betrieb des variablen Kompressors so gesteuert wird, dass ein vorgegebener Kraftmaschinen-Sollkraftstoffverbrauch erzielt wird.

6. Anordnung nach einem der Ansprüche 1-4, wobei die Turbine eine feste Geometrie besitzt oder wobei die Turbine eine variable Geometrie besitzt und wobei gemäß c1) bei einem vorgegebenen Verstärkungsgrad der variable Kompressor so gesteuert wird, dass eine Einlassdrosselung eingestellt wird, die eine engere Turbinenstellung erzwingt, um den vorgegebenen Verstärkungsgrad zu erzielen, indem der Gegendruck erhöht wird und die AGR-Rückführung erleichtert wird; oder
c2) bei einem vorgegebenen Verstärkungspegel der variable Kompressor so gesteuert wird, dass die AGR-Rückführung erleichtert wird.

7. Anordnung nach einem der Ansprüche 1-4, wobei die Anordnung ferner einen Ladeluftkühler (IC) umfasst, der an der Einlassleitung zwischen dem Kompressor (TPC) und dem variablen Kompressor (ESC) angeordnet ist.

8. Anordnung nach einem der Ansprüche 1-4, wobei die Anordnung ferner mit einer Hochdruck-AGR versehen ist und ein Ladeluftkühler (IC) an der Einlassleitung zwischen dem variablen Kompressor (ESC) und einem Punkt der Einlassleitung, an dem ein Abgasrückführungsrohr (AGR-Rohr, AGRP) abzweigt, angeordnet ist.

9. Anordnung nach einem der Ansprüche 1-4, wobei die Anordnung ferner mit einer Hochdruck-AGR und mit einem Ladeluftkühler (IC), der an der Einlassleitung zwischen dem Kompressor (TCP) und einem Punkt an der Einlassleitung, an dem ein Abgasrückführungsrohr (AGR-Rohr, AGRP) abzweigt, angeordnet ist, versehen ist.

10. Anordnung nach einem der vorhergehenden Ansprüche, wobei der variable Kompressor ein Roots-Gebläse oder ein Schraubengebläse ist und wobei die Anordnung Folgendes umfasst:
- einen Getriebezug und ein stufenlos verstellbares Getriebe (CVT), das eine Kurbelwelle der Brennkraftmaschine (ICE) und den variablen Kompressor betriebstechnisch verbindet, oder
- Batteriespeichermittel und einen elektrischen Antrieb (MG), der mit den Batteriespeichermitteln elektrisch verbunden ist und dafür ausgelegt ist, den variablen Kompressor anzutreiben, und als ein Generator arbeitet, wenn eine Drosselung der Einlassleitung angefordert wird, oder als ein Motor arbeitet, wenn der variable Kompressor eine zweite Aufladungsstufe definiert, oder
- einen ersten elektrischen Antrieb (MG), der dafür ausgelegt ist, den variablen Kompressor anzutreiben oder von ihm angetrieben zu werden, und einen zweiten Elektromotor/Generator, der mit einer Kraftmaschinenkurbelwelle verbunden werden kann, um den ersten elektrischen Antrieb (MG) zu versorgen oder durch diesen versorgt zu werden.

11. Anordnung nach Anspruch 10, wobei der elektrische Antrieb (MG) einen Stator besitzt, der mit einem festen Punkt der Brennkraftmaschine verbunden ist oder mit einer Kurbelwelle der Brennkraftmaschine verbunden ist, derart, dass nur eine Drehzahländerung in Bezug auf die Kurbelwellendrehzahl durch den elektrischen Antrieb elektrisch ergänzt wird.

12. Anordnung nach einem der vorhergehenden Ansprüche, wobei das AGR-Rohr ein AGR-Ventil (AGRV) umfasst, das damit verbunden ist, um eine rückgeführte Abgasströmung zu steuern, wobei dann, wenn die AGR-Rohre in einen Einlassabschnitt zwischen dem Kompressor und dem variablen Kompressor (c2)) führen, die Anordnung Druckmittel umfasst, um einen Druck in dem Einlassabschnitt zu messen, und wobei die Steuermittel (ECU) dafür ausgelegt sind, das AGR-Ventil in Übereinstimmung mit der Druckmessung zu steuern.

13. Verfahren zum Betreiben einer Brennkraftmaschinenanordnung, wobei die Anordnung eine Brennkraftmaschine (ICE) mit einem Einlasskrümmer (IP) und einem Auslasskrümmer (EP) umfasst; wobei die Anordnung eine mit dem Auslasskrümmer (EP) verbundene Auslassleitung (EL), eine mit dem Einlasskrümmer (IP) verbundene Einlassleitung (IL) und einen Turbolader (TC), der eine an der Auslassleitung (EL) angeordnete Turbine (TB) und einen an der Einlassleitung angeordneten Kompressor (TCP) enthält, umfasst, wobei die Turbine (TB) den Kompressor (TCP) axial rotatorisch antreibt und wobei ein variabler Kompressor (ESC) zwischen dem Einlass (IP) und dem Kompressor (TCP) angeordnet ist, um eine gesamte Luftmenge, die durch den Kompressor (TCP) komprimiert wird, zu empfangen, wobei das Verfahren wenigstens den folgenden Schritt umfasst, der darauf zielt, den variablen Kompressor (ESC) zu steuern:
a) Einstellen einer Einlassdrosselung, wobei der variable Kompressor so gesteuert wird, dass die Einlassluft anhand einer Turboladerdrehzahl gesteuert wird, indem eine Luftströmung, die in die Brennkraftmaschine eintritt, verringert wird, um eine zu hohe Turboladerdrehzahl zu vermeiden.

14. Verfahren nach Anspruch 13, das ferner wenigstens einen der folgenden Schritte umfasst:
b) Einstellen einer Einlassdrosselung anhand der Temperatur wenigstens einer Komponente eines Nachbehandlungssystems (ATS), das mit der Abgasleitung verbunden ist, um eine Temperatur der ATS-Komponente zu steuern;
c1) Einstellen einer Einlassdrosselung, um einen Druck in einem Einlassleitungsabschnitt direkt stromabwärts des variablen Kompressors, wo ein Hochdruck-Abgasrückführungsrohr (AGR-Rohr, AGRP) abzweigt, zu verringern, oder
c2) Definieren einer zweiten Aufladungsstufe, um einen Druck in einem Einlassleitungsabschnitt direkt stromaufwärts des variablen Kompressors in Bezug auf den Abgasdruck dort, wo ein Hochdruck-Abgasrückführungsrohr (AGR-Rohr, AGRP) abzweigt, zu verringern;
d) Steuern einer Stellung der Turbine mit variabler Geometrie, um den Turbolader in seinem optimalen Betriebszustand zu halten und um einen vorgegebenen Brennkraftmaschinen-Verstärkungspegel durch Steuern des variablen Kompressors, um die durch den Turbolader bereitgestellte Verstärkung zu erhöhen oder zu verringern, um den vorgegebenen Brennkraftmaschinen-Verstärkungspegel zu erhalten, zu erzielen.

15. Computerprogramm, das Computerprogrammcodemittel enthält, die dafür ausgelegt sind, die Vorrichtung nach Anspruch 1 zu veranlassen, das Verfahren nach Anspruch 13 oder 14 auszuführen, wenn das Programm in Steuermitteln (ECU) nach Anspruch 1 läuft.

16. Computerlesbares Medium, auf dem das Programm nach Anspruch 15 aufgezeichnet ist.

## Revendications

1. Agencement de moteur à combustion interne comprenant un moteur à combustion interne (ICE) comportant une admission (IP) et une tubulure d'échappement (EP) ; l'agencement comprenant une conduite de sortie (EL) raccordée à la tubulure d'échappement (EP), une conduite d'entrée (IL) raccordée à la tubulure d'admission (IP), un turbocompresseur (TC) comprenant une turbine (TB) agencé sur la conduite de sortie (EL) et un compresseur (TCP) agencé sur la conduite d'entrée, dans lequel la turbine (TB) est agencée pour entraîner en rotation le compresseur (TCP) et dans lequel un compresseur volumétrique pouvant être commandé, ci-après « compresseur variable (ECS) », est agencé entre l'admission (IP) et ledit compresseur (TCP), le moteur à combustion interne **étant caractérisé en ce que** ledit compresseur variable (ESC) est agencé pour recevoir une quantité entière d'air comprimé par ledit compresseur (TCP) et **en ce qu'il comprend** un moyen de commande (ECU) programmé pour commander ledit compresseur variable
a) pour régler un étranglement d'admission, dans lequel le compresseur variable est commandé pour étrangler l'air d'admission sur la base d'une vitesse de turbocompresseur,
en réduisant un flux d'air entrant dans le moteur à combustion, afin d'éviter une survitesse de turbocompresseur.

2. Agencement selon la revendication 1, dans lequel le compresseur variable est raccordé à un dispositif d'entraînement électrique ou est raccordé à un vilebrequin du moteur à combustion interne par un train d'engrenages à rapport variable, de manière à extraire de l'énergie du flux d'air pompé par le turbocompresseur et à convertir une telle énergie en énergie électrique ou, respectivement, en énergie mécanique vers le vilebrequin, lorsque le compresseur variable est commandé pour définir ledit étranglement d'admission.

3. Agencement selon la revendication 1, dans lequel ledit moyen de commande est également programmé pour au moins l'une des actions suivantes :
b) régler un étranglement d'admission sur la base d'au moins une température de composant d'un système de post-traitement (ATS) raccordé à ladite conduite d'échappement, afin de commander une température dudit composant ATS ;
c1) régler un étranglement d'admission afin de réduire une pression dans une section de conduite d'entrée juste en aval du compresseur variable où un tuyau de recirculation de gaz d'échappement (EGR) haute-pression (EGRP) sort ou
c2) définir un second stade de suralimentation, coopérant avec ledit compresseur (TCP) afin de réduire une pression dans une section de conduite d'entrée juste en amont du compresseur variable en relation avec la pression d'échappement, où un tuyau de recirculation de gaz d'échappement (EGR) haute-pression (EGRP) sort de manière à aspirer les gaz d'échappement ;
d) dans lequel ladite turbine présente une géométrie variable et ladite unité de commande est configurée pour commander une position de rack de ladite turbine afin de maintenir le turbocompresseur dans son état de fonctionnement optimal et d'atteindre un niveau d'amplification de moteur à combustion prédéterminé en commandant ledit compresseur variable pour compléter ou réduire l'amplification fournie par ledit turbocompresseur afin d'obtenir ledit niveau d'amplification de moteur à combustion prédéterminé.

4. Agencement selon l'une quelconque des revendications précédentes, dans lequel ledit moyen de commande (ECU) est programmé pour commander ledit compresseur variable, en fonction d'au moins deux des actions a), (b), c1) ou c2), d.

5. Agencement selon l'une quelconque des revendications précédentes, dans lequel, lorsque le moteur tourne à une charge partielle, le fonctionnement du compresseur variable est commandé pour obtenir une consommation de carburant de moteur cible de moteur prédéterminée.

6. Agencement selon l'une quelconque des revendications 1 à 4, dans lequel ladite turbine présente une géométrie fixe ou dans lequel ladite turbine présente une géométrie variable et dans lequel selon
c1), étant donné un niveau d'amplification prédéterminé, le compresseur variable est commandé pour régler un étranglement d'admission, forçant un rack de turbine plus étroit à atteindre ledit niveau d'amplification prédéterminé, en augmentant la contre-pression et facilitant la recirculation EGR ;
c2), étant donné un niveau d'amplification prédéterminé, le compresseur variable est commandé pour faciliter la recirculation EGR.

7. Agencement selon l'une quelconque des revendications 1 à 4, dans lequel l'agencement comprend en outre un refroidisseur intermédiaire (IC) agencé sur ladite conduite d'entrée entre ledit compresseur (TCP) et ledit compresseur variable (ESC).

8. Agencement selon l'une quelconque des revendications 1 à 4, dans lequel l'agencement est en outre pourvu d'une EGR haute-pression et d'un refroidisseur intermédiaire (IC) agencés sur ladite conduite d'entrée entre ledit compresseur variable (ESC) et un point sur la conduite d'entrée où le tuyau de recirculation de gaz d'échappement (EGR) (EGRP) sort.

9. Agencement selon l'une quelconque des revendications 1 à 4, dans lequel l'agencement est en outre pourvu d'une EGR haute-pression et d'un refroidisseur intermédiaire (IC) agencés sur ladite conduite d'entrée entre ledit compresseur (TCP) et un point sur la conduite d'entrée où le tuyau de recirculation de gaz d'échappement (EGR) (EGRP) sort.

10. Agencement selon l'une quelconque des revendications précédentes, dans lequel ledit compresseur variable est une soufflante Roots ou une soufflante à vis et dans lequel l'agencement comprend
- un train d'engrenages et un engrenage à variation continue (CVT) raccordant fonctionnellement un vilebrequin du moteur à combustion interne (ICE) et le compresseur variable entre eux ou
- un moyen de stockage de batterie et un dispositif d'entraînement électrique (MG) électriquement raccordé audit moyen de stockage de batterie et agencé pour entraîner ledit compresseur variable et servant de générateur lorsqu'un étranglement de la conduite d'admission est demandé ou de moteur lorsque le compresseur variable définit un second stade de suralimentation ou
- un premier dispositif d'entraînement électrique (MG) agencé pour entraîner ou être entraîné par ledit compresseur variable et un second moteur/générateur électrique approprié pour être raccordé à un vilebrequin de moteur de manière à alimenter ou à être alimenté par ledit premier dispositif d'entraînement électrique (MG).

11. Agencement selon la revendication 10, dans lequel ledit dispositif d'entraînement électrique (MG) comporte un stator raccordé à un point fixe du moteur à combustion interne ou raccordé à un vilebrequin du moteur à combustion interne de manière à ce que seule une variation de vitesse par rapport à la vitesse de vilebrequin soit complétée électriquement par le dispositif d'entraînement électrique.

12. Agencement selon l'une quelconque des revendications précédentes, dans lequel ledit tuyau d'EGR comprend une valve EGR (EGRV) raccordée sur celui-ci afin de commander un flux de gaz d'échappement remis en circulation et dans lequel, lorsque le tuyau d'EGR sort dans une section d'entrée entre le compresseur et le compresseur variable (c2) l'agencement comprend un moyen de pression pour mesurer une pression dans ladite section d'entrée et dans lequel ledit moyen de commande (ECU) est agencé pour commander ladite valve EGR en fonction de ladite mesure de pression.

13. Procédé pour faire fonctionner un agencement de moteur à combustion interne, l'agencement comprenant un moteur à combustion interne (ICE) comportant une admission (IP) et une tubulure d'échappement (EP) ; l'agencement comprenant une conduite de sortie (EL) raccordée à la tubulure d'échappement (EP), une conduite d'entrée (IL) raccordée à la tubulure d'admission (IP), un turbocompresseur (TC) comprenant une turbine (TB) agencé sur la conduite de sortie (EL) et un compresseur (TCP) agencé sur la conduite d'entrée, dans lequel la turbine (TB) entraîne axialement en rotation le compresseur (TCP) et dans lequel un compresseur variable (ECS) est agencé entre l'admission (IP) et ledit compresseur (TCP) pour recevoir une quantité entière d'air comprimé par ledit compresseur (TCP), le procédé comprenant au moins l'étape suivante visant à commander ledit compresseur variable (ESC) :
a) régler un étranglement d'admission, dans lequel le compresseur variable est commandé pour étrangler l'air d'admission sur la base d'une vitesse de turbocompresseur, en réduisant un flux d'air entrant dans le moteur à combustion, afin d'éviter une survitesse de turbocompresseur.

14. Procédé selon la revendication 13, comprenant en outre au moins l'une des étapes suivantes :
b) régler un étranglement d'admission sur la base d'au moins une température de composant d'un système de post-traitement (ATS) raccordé à ladite conduite d'échappement, afin de commander une température dudit composant ATS ;
c1) régler un étranglement d'admission afin de réduire une pression dans une section de conduite d'entrée juste en aval du compresseur variable où un tuyau de recirculation de gaz d'échappement (EGR) haute-pression (EGRP) sort ou
c2) définir un second stade de suralimentation afin de réduire une pression dans une section de conduite d'entrée juste en amont du compresseur variable en relation avec la pression d'échappement, où un tuyau de recirculation de gaz d'échappement (EGR) haute-pression (EGRP) sort ;
d) commander une position de rack de ladite turbine présentant une géométrie variable afin de maintenir le turbocompresseur dans son état de fonctionnement optimal et d'atteindre un niveau d'amplification de moteur à combustion prédéterminé en commandant ledit compresseur variable pour compléter ou réduire l'amplification fournie par ledit turbocompresseur afin d'obtenir ledit niveau d'amplification de moteur à combustion prédéterminé.

15. Programme informatique comprenant un moyen de code de programme informatique adapté pour amener le dispositif selon la revendication 1 à effectuer le procédé selon la revendication 13 ou 14, lorsque ledit programme est exécuté sur un moyen de commande (ECU) selon la revendication 1.

16. Support lisible par ordinateur ayant le programme de la revendication 15 enregistré sur celui-ci.
